# EUROPÄISCHE PATENTANMELDUNG

(11) **EP 2 907 787 A1**
(43) Veröffentlichungstag der Anmeldung: **19.08.2015**
(21) Anmeldenummer: 13004550.3
(22) Anmeldetag: 17.02.2014
(51) Int. Cl.: C01B 3/04

(54) **Aggregat zur Massenherstellung von Wasserstoff**

(71) Anmelder: Rautenberg, Ewald, 53840 Troisdorf (DE)
(72) Erfinder: Rautenberg, Ewald, 53840 Troisdorf (DE)
(74) Vertreter: Kreuzberg, Markus

(57) **Zusammenfassung**

Die Erfindung betrifft eine Vorrichtung und ein Verfahren zur Herstellung von Wasserstoff, aufweisend einen Behälter, welcher zwei aufeinander gezogene, mit kleinen Löchern versehene Rohre umfasst. Zwischen dem äußeren und dem inneren Rohr ist eine perforierte Innenschicht eingespannt, deren Öffnungen so klein sind, dass nur Wasserstoffmoleküle hindurch treten können. Der Behälter wird von einer Abdichtungsschicht umgeben, wobei der Raum zwischen der Abdichtungsschicht und dem äußeren Rohr mit offenporigen Schaumstoff gefüllt ist. Des weiteren umfasst der Behälter vier Öffnungen, eine für den Wassereinlauf, eine für den Wasserablauf, eine für den Eintritt von Druckluft und eine für den Austritt des Wasserstoffs. Der Behälter weist Mittel zur Abgabe von Ultraschall, von Hyperschall und ein Lasergerät auf, mit deren Einsatz das im Behälter befindliche Wasser in Wasserstoff und Sauerstoff getrennt wird.

## Beschreibung

Das Aggregat hat einen Wasserbehälter. Der runde Boden hat die Größe von ca. 600 mm Umfang. Am günstigsten ist Edelstahl. Am Boden des rohrartigen Behälters werden je ein Ultraschall- und ein Hyperschall-Gerät montiert. Außerdem werden zwei Lasergeräte eingebaut. Ein Lasergerät gibt intensive harte Lichtblitze in das Wasser ab. Durch den blanken Edelstahl werden die Blitze vielfach reflektiert, Der zweite Laser hat eine besondere Funktion: Auf einem schmalen Plastikband wird leicht bearbeitetes Silizium (feinster Sand) an dem Laser vorbeigeführt, sodass dieser " Schüsse" auf das Material abgeben kann. Das erzeugt kleine Explosionen und laufende besondere Erschütterungen im Wasser. Die Bindung von Sauerstoff und Wasserstoff wird durch die harten Einwirkungen und die Hochfrequenzen nahezu "zerrissen". Alle Geräte befinden sich im Wasser; die Funktionen bleiben natürlich trocken.

Die Herstellung des Behälters ist einfach: Es sind zwei Rohre, aus Edelstahl von 600 mm Durchmesser und ca. 1700 mm Höhe. Viele kleine Löcher machen aus den Rohren Siebe. Das Wichtigste ist die "Innenschicht", die zwischen die beiden Rohre gelegt wird. Die Rohre sind aus gleichem Material und gleich lang. Das Innere Rohr wird stark gekühlt, das äußere stark erwärmt. Dadurch wird der Umfang des Innenrohrs verringert und das Außenrohr erweitert. Um das innere Rohr wird die "Innenschicht" von 1-1,2 mm überall geschlossen angebracht. Das erwärmte Außenrohr wird über das kalte Innenrohr und die Innenschicht gezogen. Der Behälter bekommt dadurch eine besondere Festigkeit. Bei Normaltemperatur pressen sich die Rohre zusammen und spannen die Innenschicht völlig gleichmäßig ein.

Die Innenschicht verursacht die Funktion. Es ist ein sehr festes Gewebe, von beiden Seiten mit gehärtetem, sehr dünnem Nanomaterial beschichtet. Von beiden Seiten wird dieses Nanomaterial mit winzigen "Laserbohrungen" auf der ganzen Fläche perforiert. Die Laserbearbeitung liegt im Femto-Bereich. Die Öffnungen sind so winzig, dass nur Wasserstoffmoleküle austreten können. Die sehr kleinen Öffnungen der Innenschicht dürfen sich auch bei Belastungen nicht weiten. Ein solches Material und die Laserbearbeitung sind erst seit kurzer Zeit herstellbar.

Um den Behälter wird ein offenporiger Schaumstoff von ca. 60 mm Stärke gegeben. Wasserstoff gelangt in den Schaumstoff. Über den Schaumstoff ist noch eine Abdichtungsschicht gelegt. Diese muss absolut dicht sein. Sie dient dazu, dass Wasserstoff nicht ins Freie gelangt. Der Wasserstoff wird in entsprechende Tanks geleitet. Alles wird ähnlich wie Erdgas behandelt, obwohl der Brennwert wesentlich höher ist.

Die Decke des Behälters ist wie der Boden konstruiert. Alles ist "blank". Es sind vier Öffnungen vorhanden: Eine für den Wassereinlauf, eine für den Weiterlauf des Wassers. Eine für den Eintritt von Druckluft, und eine für den Austritt des Wasserstoffes. An der Seite des Behälters sind alle Regulierungs-Instrumente angebracht. Dieses Aggregat kann durch alle herkömmlichen Türen transportiert werden. Selbstverständlich können auch große Einheiten hergestellt werden. Die Instrumente im Inneren müssen natürlich angepasst sein. Mit Wasserstoff können Brennstoffzellen Elektrizität erzeugen.

Die Herstellung von Wasserstoff verläuft ohne Stopp bei Tag und Nacht, fast 8.400 Stunden pro Jahr, mit eigenem Strom. Der Grundstoff muss nicht über tausende Kilometer herangeschafft werden. Es ist Wasser! Dazu noch sehr gute Eigenschaften: Bei der Herstellung und auch beim Verbrauch fallen keine Abgase an. Die Luft wird sauberer, das Atmen gesünder. Als Nebenprodukt fällt auch noch Sauerstoff an.

Rentabilität: Das Aggregat wird einmal hergestellt, mit langjähriger Haltbarkeit und wenig Wartung.

Es wird laufend Verbesserungen geben, bei der Wasserstoffherstellung und auch bei den Brennstoffzellen. Die Herren Benz, Daimler, Otto, Diesel und selbst Wernher von Braun haben die weitere Entwicklung Ihrer Antriebe absolut nicht voraussehen können.

### Anwendungsmöglichkeiten für Wasserstoff

Kerngedanke: Im Wasserstoff steckt mehr Energie als zu Herstellung des Stoffes benötigt wird.

Diese Erläuterung gilt für die Erstaufstellung des Aggregates, wenn noch kein Wasserstoffvorrat vorhanden ist. Das Aggregat muss an das Stromnetz angeschlossen werden. Zu keinem Zeitpunkt wird Elektrolyse angewendet. Wenn einige Kubikmeter Wasserstoff mit dem Aggregat hergestellt sind, wird die Brennstoffzelle eingeschaltet und die erforderliche Elektrizität kommt aus dem Wasserstoff. Netzstrom wird fast nie mehr benötigt. Ab diesem Zeitpunkt arbeitet das Aggregat nur noch mit Strom aus der Brennstoffzelle. Es wird mehr Wasserstoff hergestellt als die Brennstoffzelle benötigt. Der überschüssige Wasserstoff wird "gelagert". Nun kann Strom hergestellt werden und Wasserstoff - oder beides zugleich. Im Wasserstoff ist so viel Energie vorhanden, dass beides erfolgen kann. Es gibt sehr viele Möglichkeiten dieses hochenergetische Gas zu verwerten. Einige Anwendungen werden hier genannt:
1. Wasserstoff kann ähnlich wie Erdgas, für Heiz-und Kochwecke eingesetzt werden.
2. Es hat einen wesentlich höheren Brennwert. Das ist jedoch regulierbar.
3. Es kann als Gas für Gaskraftwerke dienen. Wiederum ähnlich wie Erdgas.
4. Es kann für Motore als Treibstoff verwendet werden, wie bei allen Gasmotoren.
   Die Umstellung des Motors ist einfach. Anfangs kann zusätzlich Benzin eingesetzt werden, weil wahrscheinlich nicht überall Wasserstoff nachgetankt werden kann.
5. Mit Brennstoffzellen kann stets Strom erzeugt werden, für alle denkbaren Zwecke.

Eine Tatsache sollte immer intensiv erwähnt werden: Der Grundstoff der Energie muss nicht aus tausenden von Kilometern herangeschafft werden. Wasser ist in unseren Breiten reichlich vorhanden.

Die Herstellung der Aggregate ist in kleinen Einheiten möglich; zunächst in Serien- und dann in Massenproduktion. Selbstverständlich sind auch größere Einheiten möglich. Die Instrumente in dem Aggregat müssen natürlich immer angepasst werden. Weitere sehr positive Eigenschaften: Bei der Herstellung und auch beim Verbrauch fallen keine Abgase an. Die Atemluft wird sauberer. Ein Nebenprodukt ist zusätzlicher Sauerstoff.

Die Herstellung von Wasserstoff erfolgt pausenlos. Es gibt keinen Stopp. Produziert wird rund 8.400 Stunden pro Jahr, mit eigenem Strom aus Brennstoffzellen. Erforderlicher Spitzenstrom kommt aus "Gaslagern". Das selbst produzierte Gas kann komprimiert für Autos verwendet werden.

**Der Rohstoff ist Wasser - nichts als Wasser.**

## Patentansprüche

1. Die Erfindung-künftig Verfahren genannt,
ist **dadurch gekennzeichnet, dass** eine Eigenart der Natur als Vorbild gilt. Die Fische, besonders in der Tiefsee, sind ständig im Wasser. Sie sind in der Lage mit Ihren Kiemen den erforderlichen Sauerstoff und andere lebensnotwenige Gase zur Verdauung dem Wasser zu entnehmen. Das erfolgt mit geringem Druck, kaum
Temperatur und mit sehr wenig Energie. Vorbilder der Natur können nicht ohne weiteres in die Technik übernommen werden.

2. Das Verfahren ist **dadurch gekennzeichnet, dass** Materialien und Bearbeitungen herangezogen werden, welche die winzigen Moleküle des Wasserstoffes dem Wasser entziehen können

3. Das Verfahren ist **dadurch gekennzeichnet, dass** u.a. Nanomaterialien, mit den erforderlichen winzigen Öffnungen, verwendet werden können, die in der Lage sind die Wasserstoffmoleküle vom Wasser zu trennen.
Die Grundmaterialien zur Herstellung der erforderlichen Apparaturen können unterschiedlicher Art sein, wie z.B. Edelstahl, spezielle Kunststoffe usw.

4. Das Verfahren ist **dadurch gekennzeichnet, dass** für die sehr kleinen Öffnungen, spezielle Laserbohrungen vorgenommen werden. Geeignet hierfür sind Ultra-kurzpuls-Laserbohrungen im Femto-Bereich.

5. Das Verfahren ist **dadurch gekennzeichnet, dass** ein geringer Druck auf das Wasser ausgeübt wird, der im kleinen einstelligen Druckbereich liegt. Der Druck aus einer beliebigen Haushalts-Wasserleitung reicht aus.

6. Das Verfahren ist **dadurch gekennzeichnet, dass** Verbesserungen auf die Trennungsverfahren vorgenommen werden können. Die Moleküle sowohl des Wasserstoffes als auch des Sauerstoffes lassen sich vom Wasser besser trennen, wenn Ultraschall oder Hyperschall eingesetzt wird.

7. Das Verfahren ist **dadurch gekennzeichnet, dass** nach dem Austreten der Wasserstoffmoleküle der Wasserstoff "gesammelt" und in einem Wasserstoffbehälter für mehrere Verwendungszwecke herangezogen werden kann.

8. Das Verfahren ist **dadurch gekennzeichnet, dass** Wasserstoff zur Verbrennung, ähnlich wie Erdgas, verwendet werden kann, obwohl es eine wesentlich höhere Brennkraft besitzt.

9. Das Verfahren ist **dadurch gekennzeichnet, dass** bei größeren Wasserstoff - Volumen Brennstoffzellen beschickt werden können, die elektrischen Strom liefern. Der Strom kann für alle Zwecke benützt werden, wie jeder Netzstrom.

10. Das Verfahren ist **dadurch gekennzeichnet, dass** zu Beginn der Anwendung noch Strom aus einem vorhandenen Netz angewendet werden muss. Nach der Wasserstoffherstellung wird Strom mit einer Brennstoffzelle hergestellt. Dieser Strom reicht für die weitere Wasserstoffherstellung aus und kann zusätzlich für alle möglichen elektrischen Anwendungen eingesetzt werden. Der Strom aus dem Netz kann nach kurzer Zeit abgeschaltet werden. Dann ist die Elektrizität aus der Brennstoffzelle autonom.

11. Das Verfahren ist **dadurch gekennzeichnet, dass** es völlig dezentral eingesetzt werden kann. Die Herstellungsmodule können in Serienproduktion, Massenproduktion oder in großen Einheiten hergestellt werden.

12. Das Verfahren ist **dadurch gekennzeichnet, dass** auch der im Wasser vorhandene Sauerstoff gewonnen werden kann. Das geschieht durch etwas größere "Bohrungen". Die Wasserstoffmoleküle und die Sauerstoffmoleküle haben unterschiedliche "Durchmesser". Sauerstoff kann ebenfalls in Sauerstofftanks "gelagert" werden.
